# EUROPEAN PATENT SPECIFICATION

(11) **EP 1 340 153 B1**
(45) Date of publication and mention of the grant of the patent: **02.09.2009**
(21) Application number: 01995467.6
(22) Date of filing: 09.11.2001
(51) Int. Cl.: H04L 12/403, H04L 12/43

(54) **Network controller for digitally controlling remote devices via a common bus**
Netzwerksteuerung zur digitalen Steuerung entfernt angeordneter Geräte über einen gemeinsamen Bus
Unité de contrôle d'un réseau destine à assurer le contrôle numérique de périphériques à distance via un bus commun

(30) Priority: 08.12.2000 US 254137 P; 14.12.2000 US 736878
(43) Date of publication of application: 03.09.2003
(60) Divisional application: 05077656.6
(73) Proprietor: The Boeing Company, Chicago, IL 60606-2016 (US)
(72) Inventor: ELLERBROCK, Philip, J., St. Peters, MO 63376 (US); KONZ, Daniel, W., Florissant, MO 63031 (US); WINKELMANN, Joseph, P., St. Peters, MO 63376 (US)
(74) Representative: McLeish, Nicholas Alistair Maxwell
(86) International application number: PCT/US2001/047393
(87) International publication number: WO 2002/046938

(56) References cited:
- EP-A- 0 562 333
- WO-A-00/62501
- US-A- 4 969 147
- US-A- 5 557 634
- US-A- 5 809 027
- INFINEON: "C167CR 16-bit Single-Chip Microcontroller" INFINEON HOME PAGE, [Online] April 2000 (2000-04), XP002201995 Retrieved from the Internet: URL:www.infineon.com> [retrieved on 2002-06-12]
- INTERSIL: "HD-15531 CMOS Manchester Encoder- Decoder" INTERNET ARTICLE, March 1997 (1997-03), XP002298816 Retrieved from the Internet: URL:http://www.intersil.com/data/fn/fn2961 .pdf> [retrieved on 2004-09-29]
- PATZKE R: "Fieldbus basics" 15 October 1998 (1998-10-15), COMPUTER STANDARDS AND INTERFACES, ELSEVIER SEQUOIA. LAUSANNE, CH, PAGE(S) 275-293 , XP004144062 ISSN: 0920-5489 * page 288 - page 289 *
- INFINEON: "CAN Baudrate Detection With Infineon CAN devicers" INFINEON HOME PAGE, [Online] July 1999 (1999-07), XP002201996 Retrieved from the Internet: URL:www.infineon.com> [retrieved on 2002-06-12]
- GOTLIB G I ET AL: "DECODING TECHNIQUES IN COAXIAL-CABLE-BASED LOCAL-AREA NETWORKS" AUTOMATIC CONTROL AND COMPUTER SCIENCES, ALLERTON PRESS, INC. NEW YORK, US, vol. 23, no. 2, 1989, pages 47-54, XP000084541 ISSN: 0146-4116
- INFINEON: "C167CR 16-bit Single-Chip Microcontroller" INFINEON HOME PAGE, [Online] April 2000 (2000-04), XP002201995 Retrieved from the Internet: <URL:www.infineon.com> [retrieved on 2002-06-12]
- INFINEON: "CAN Baudrate Detection With Infineon CAN devicers" INFINEON HOME PAGE, [Online] July 1999 (1999-07), XP002201996 Retrieved from the Internet: <URL:www.infineon.com> [retrieved on 2002-06-12]
- CONDOR ENGINEERING: "MIL-STD-1553 Tutorial" INTERNET ARTICLE, [Online] - 20 May 2000 (2000-05-20) pages 1-41, XP000863894 Internet Retrieved from the Internet: URL:http://digilander.libero.it/LeoDaga/Co rsi/AD/Documenti/MIL-STD-1553Tutorial.pdf>

## Description

The present invention relates generally to network controllers for digitally directing communications with a variety of remote devices via a common bus.

In many industries today, monitoring systems are used to assess either possible system failures or the affects of environment and other external forces on an object of interest. For example, in the avionics industry, monitoring systems are employed to monitor parameters, such as strains, acceleration, pressures, corrosion, and temperatures at various critical structural locations on aircraft. Similarly, such monitoring systems could be used in the automobile industry to control and monitor everything from on/off occupant controls to drive-train controls and multimedia systems.

Many of these conventional monitoring systems use a plurality of remote devices, such as sensors, actuators and subsystems that are placed about the object being monitored at the critical locations. Many of these conventional monitoring systems utilize dedicated analog signal connecting, thus making the monitoring system dedicated to the application and complicating the wiring systems with separate wiring to each device to be monitored. Where networking exists there is often many multiplexer units networked together that gather many individual analog signals. While the analog wiring is now shorter, a significant amount of dedicated wiring to individual transducers still exists. Further, existing and proposed "smart transducer" protocols, which permit signal conditioning at the transducer and offer a fully digital networking solution without significant analog signal wiring, often lack time-determinism, speed, simplicity to achieve cost effectiveness in most applications.

In many industries today, including the avionics and automotive industries, the complexity of the network may make many conventional monitoring systems impractical for a number of reasons. Specifically, the dedicated wiring and signal conditioning can be expensive, bulky, heavy and hard to install and maintain. This is especially critical in aircraft applications, where weight concerns are at the forefront. Further, in the automotive industry, the added wiring may add to the weight and possibly the size of the car. In addition, dedicated wiring and signal conditioning renders automotive electronic-control modules application specific and thus more costly. Further, dedicated wiring limits the amount of factory and dealer available options available due to the extra cost of preparing an automotive platform for the options with extra harnessing and interfaces.

Additionally, as stated, many conventional monitoring systems transmit data in an analog format. Typically, analog signals are susceptible to noise introduced into the signals during data transmission. Given that many of the transmitted signals have a low amplitude to start with, this noise can corrupt signals as they propagate from the transducer to the signal conditioner. Further, as many of these remote devices are scattered a fair distance from the controller, the electrical lines connecting the remote device to the controller may be sufficiently long to cause signal degradation due to DC resistance.

In light of this, it would be advantageous to replace the dedicated wiring and the analog transmission with a common bus and digital transmission of data. But, many conventional digital networks suffer from a variety of problems themselves. For example, many existing digital networks demand complicated protocols requiring processors and, thus, suffer from high overhead network communication. The use of processors in such systems results in bulky and more expensive network interfaces. Additional problems include low maximum bit rate, low effective data rate (due to overhead), expensive physical layers, and low network device count. Moreover, many computer systems that include digital networks do not operate in a time-deterministic manner. These computer systems generally lack the capability to schedule a trigger command to the network components that repeats with any precision timing.

The Infineon manual XP002201995 C167CR/C167SR 16 bit single chip micro controller describes a microcontroller having two serial interfaces to allow serial communication with other microcontrollers, processors, terminals or external peripheral components. One of the interfaces is an asynchronous/synchronous serial channel that supports both asynchronous and synchronous communication. The second interface is a high-speed synchronous serial channel that only allows synchronous communication. The microcontroller additionally has a CAN module to allow communication over a CAN network.

The Intersil document XP2298816 HD-15531discloses a controller for providing date and clock signal to via common bus in synchronous and asynchronous mode at the predetermined bit rate.

In light of the foregoing, it would be advantageous to provide a network system that allows network components to digitally communicate over an inexpensive, simple and high-speed, yet robust, network line with a simple message protocol, small components size and low wire count. The network system would also advantageously operate without the use of a microcontroller or processor for the network components. Also, the network system would support both acquisition and control, acquire data simultaneously from the components and operate with synchronized data samples from the components. Further, the network system would allow for high component counts, longer network lines and insure time-determinism in a precise manner.

### SUMMARY OF THE INVENTION

In view of the foregoing background, the present invention therefore provides a network controller according to claim 1 for digitally directing communications with a plurality of remote devices via a common bus.

The network controller of the present invention allows various remote devices to communicate in either synchronous or asynchronous modes over an expensive, simple and high-speed, yet robust, network line with a simple network protocol, small component size and low wire count. Advantageously, the network controller of the present invention connects to the remote devices via a common network, thereby permitting the various remote devices to share the same wiring for communicating with the network controller Additionally, the network controller of the present invention allows for high component counts, longer network lines, and insures time-determinism in a precise manner. The network controller also allows data to flow to and from the remote devices at an alterable bit rate, supports both acquisition and control, and acquires synchronized data simultaneously from the remote devices using either an optional continuously synchronous clock, or a synchronized state change during asynchronous communication (often referred to as "isochronous").

Further, the network controller operates in conjunction with a network protocol that allows the controller to communicate with either one or several remote devices at a time across the network. Importantly, the network protocol has a fixed, low-level instruction set. Due to the simplicity of the network protocol, the network controller of the present invention can operate with remote devices that lack a processor and, instead, comprise state machines that use pass through logic to process the commands and data between the network controller and the remote devices.

As previously stated, the network controller ofthe present invention allows various remote devices to digitally communicate in either synchronous or asynchronous modes over an inexpensive, simple and high-speed, yet robust, common network. The network controller is capable of communicating with sensors, actuators and subsystems, thus allowing for both acquisition and control. The network controller also includes a transmitter for digitally transmitting messages via a common bus, and a receiver for receiving messages from the common bus. Additionally, the network controller contains a clock for providing clock signals to both the transmitter and receiver. The transmitter and receiver are selected such that the network controller is capable of selectively operating in either synchronous or asynchronous mode. In synchronous mode, the transmitter digitally transmits both the messages and clock signals via the common bus. And, in the asynchronous mode, the transmitter digitally transmits messages at a predetermined bit rate without any accompanying clock signals via the common bus.

To further allow the network controller to receive synchronized data samples from the remote devices, in one embodiment, the network controller further includes a clock transmitter for transmitting the clock signals via the common bus. This clock signal is used by the remote devices in a synchronous mode to clock in and clock out data. In the asynchronous mode where the remote devices operate based on bit rate as opposed to a synchronous clock signal, the clock transmitter operates at a constant, null, level. In another embodiment, the network controller issues a baud select command that define the predetermined bit rate at which the transmitter will transmit messages in the asynchronous mode. Additionally, in embodiments where the network controller operates in asynchronous mode, the receiver receives messages from the common bus based on the bit rate at which the messages are transmitted by the controller. Further, all of the remote devices can synchronize in a singular manner to a predetermined state-change bit within the message often referred to as isochronous mode.

The transmitter of the network controller is capable of altering the predetermined bit rate at which messages are transmitted, white communicating with the plurality of remote devices. The receiver receives messages from the remote devices via the common bus at the same predetermined bit rate at which the network controller previously transmitted the messages to the remote devices. This makes the receiver capable of receiving messages as the transmitter alters the predetermined bit rate without relying upon any clock signals. In one embodiment, the network controller transmits an example message to the remote devices at an altered bit rate following alteration of the predetermined bit rate to insure the remote devices are in sync with the network controller. In a further embodiment, the network controller issues a baud select command to the transmitter that defines the predetermined bit rate at which the messages will be transmitted.

As previously stated, in operation, the network controller works in conjunction with a network protocol having a low-level instruction set to allow the network controller to communicate with either one or several remote devices at a time across the network. Therefore, in various embodiments, the network protocol is configured in either a Manchester encoding or a Universal Asynchronous Receiver Transmitter (UART) protocol, depending upon the command protocol the remote devices are capable of understanding. In one embodiment, the network controller and the remote devices are preconfigured to operate either in the Manchester encoded form or in the UART encoded form In another embodiment, the network controller receives a command protocol select command such that the subsequent configuration of the network controller is based upon the command protocol select command. In another embodiment, the network controller sends the protocol select command to the transmitter and receiver to identify the command protocol according to which the plurality of remote devices are capable of communicating, and the transmitter and receiver thereafter transmit and receive messages, respectively, in accordance with the command protocol identified by the protocol select command. As stated above, the simplicity of the network protocol allows the network controller of the present invention to control remote devices that lack a processor and, instead, comprise state machines.

Because the network controller controls various remote devices via a common bus and insures time-determinism in a precise manner, the network controller operates using an addressing scheme. In one embodiment, the transmitter transmits messages comprising a command and an address of atleast one remote device. Further, the transmitter simultaneously transmits messages to a plurality of remote devices in accordance with a command and an address representing a group of devices. In this embodiment, each remote device is capable of reacting and responding to an assigned unique address and/or one or more assigned group addresses. The group address transmission enables the transmitter to direct a message to a group ofremote devices. In a further embodiment, the transmitter can additionally transmit messages to individual remote devices in accordance with a unique logical addresses assigned to each of the plurality of remote devices. In another embodiment, the transmitter is also adapted to transmit messages to all of the plurality of remote addresses in accordance with a global address.

Once configured, the network controller can then transmit messages between itself and the remote devices according to the same command protocol with which the plurality of remote devices are capable of understanding. In embodiments wherein the network controller transmits messages based upon the Manchester encoding command protocol, the network controller transmits the messages in either synchronous or asynchronous mode. These messages, transmitted in the Manchester encoding command protocol, comprise a sync portion, a message body and a parity flag, with the value of each transmitted bit defined by a voltage transition between first and second states. In one embodiment wherein the network controller transmits messages in the synchronous mode and includes a clock transmitter, the network controller is capable of transmitting messages via the transmitter while concurrently transmitting a clock signal to the remote devices via the clock transmitter. And, when operating in asynchronous mode, the network controller transmits messages at a predetermined bit rate without transmitting a clock signal.

In embodiments where the network controller transmits messages according to the UART command protocol, the network controller transmits the messages at a predetermined bit rate and according to a non-return-to-zero (NRZ)bit format. In another embodiment, also where the network controller transmits messages according to the UART command protocol, the network controller transmits an idle pattern to reset the plurality of remote devices prior to transmitting each message.

### BRIEF DESCRIPTION OF THE DRAWINGS

FIG. 1 is a schematic block diagram of an electrical network system implementing one embodiment of the network controller of the present invention;
FIG. 2 is a schematic block diagram of the network controller accord ing to one embodiment of the present invention;
FIG. 3 is a block diagram illustrating the operational steps of the network controller during operation of a device inventory word search according to one embodiment of the present invention;
FIG. 4 is a block diagram illustrating the operational steps of the remote device during operation of a device inventory word search according to one embodiment of the present invention;
FIG. 5 is a schematic diagram of an electrical network system implemented on an aircraft; and
FIG. 6 is a schematic diagram of a translation device implemented with an electrical network system, such as that illustrated in FIG. 5.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

As described above, many conventional analog network systems require separate sets of dedicated wires and signal conditioners to run from each component within the system, which can be expensive, bulky, heavy, hard to install and maintain, and suffer from signal degradation due to DC resistance of the wires and noise. Additionally, many conventional digital network systems demand complicated communication schemes requiring processors and, thus, suffer from high overhead network communication. These conventional digital network systems may also require separate clock signals, may not support both acquisition and control, and may only support short network lengths. Moreover, many conventional digital network systems do not operate in a time-deterministic manner and have bulky network interfaces, slow network data rates and a low network device count.

As described in greater detail below, the present invention remedies these and other problems by providing a digital network system that allows various remote devices, such as sensors, actuators and subsystems, to communicate over an inexpensive, simple and high-speed, yet robust, network line with a simple message protocol, small component size and low wire count. Advantageously, the network controller of the present invention connects to the remote devices via a common network, thereby permitting the various remote devices to share the same wiring for communicating with the network controller. Additionally, the network controller of the present invention allows for minimally sized devices, longer network lines, and insures time-determinism in a precise manner. The network controller also supports both acquisition and control, acquires data simultaneously from the remote devices and operates with synchronized data samples from the remote devices.

Further, the network controller of the present invention operates in conjunction with a network protocol that allows the controller to communicate with either one or several remote devices at a time across the network. Importantly, the network protocol used by the network controller has a fixed, low-level instruction set. Due to the simplicity of the network protocol, the network controller of the present invention can operate with remote devices that lack a processor and, instead, comprise a state machine that use pass through logic to process the commands and data between the network controller and the remote devices.

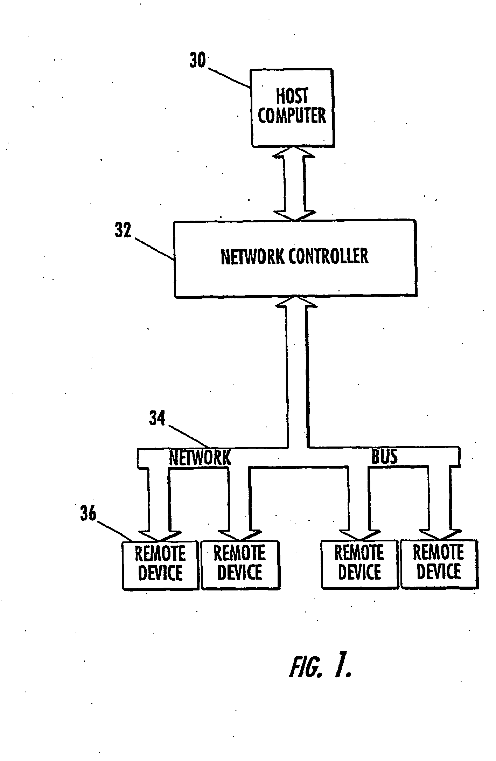

As mentioned above, the network controller of the present invention is used to interconnect various remote devices via a common network bus. FIG. 1 is an illustration of one embodiment of the implementation of the network controller of the present invention. This illustration is provided so that a more complete understanding of the present invention may be appreciated. It must be understood that the present invention is not limited to this configuration and may be embodied in many different network systems.

With regard to FIG. 1, a general embodiment of a networked system **25** in which the present invention is used is shown. Specifically, the networked system includes a host computer **30** such as high-level processor or personal computer that processes data from and sends commands and data to remote devices **36,** such as sensors, actuators and subsystems, located at desired points in the network. The networked system further includes the network controller **32** of the present invention connected between the host computer and a network bus **34.** Importantly, the network controller of the present invention comprises a part of a digital network that also comprises a common bus interconnecting the network controller and remote devices.

In some embodiments, the remote device **36** may include a network device interface (NDI), not illustrated, connected to the network **25.** The NDI is used in embodiments in which transducers, whether sensors or actuators, cannot communicate directly with the network controller. The NDI receives and interprets commands from the network controller and controls signal conditioning, such as receiving data from sensors or activating actuators, based on the commands and data from the network controller. The NDI further includes a block of stack memory for storing the data and/or messages from the sensors and/or actuators. In this embodiment, the network controller is capable of pushing data on or popping data off of the top the stack memory. Also, the NDI can receive, format and send data from the signal conditioning devices to the network controller. As the present invention is focused on the controller, the various embodiments below do not mention the communication between the network controller and NDI, but instead depict the remote device as communicating with the network controller. It must be understood that in some embodiments, the remote devices will include needed components to properly communicate with the network controller, while in other embodiments, a NDI will be needed. As such, the various communications of the remote devices discussed below may be performed by either the remote device or a NDI. A complete detailed disclosure of such a NDI is provided in U.S. Provisional Patent Application Number 60/254,136 entitled: NETWORK INTERFACE DEVICE FOR DIGITALLY INTERFACING REMOTE DEVICES TO A CONTROLLER VIA A NETWORK and filed on December 8, 2000, and U.S. Patent 6,708,239 entitled: NETWORK DEVICE INTERFACE FOR DIGITALLY INTERFACING DATA CHANNELS TO A CONTROLLER VIA A NETWORK.

As described above, the network controller **32**, coupled with the network protocol and host computer **30,** allows the network **25** to communicate with various remote devices **36,** such as sensors, actuators and subsystems. More particularly, the network controller controls a network bus **34** that interconnects the remote devices to the network controller. The network controller uses the network bus to send commands to the remote devices and receive responses from the remote devices. Within the network, the network controller is typically controlled by the host computer. By default, the host computer is generally responsible for initializing the network bus at startup, sending the initial commands and resetting all hardware. Additionally, the host computer acts as the initial network controller at power-up. Further, in some embodiments, the host computer may also act as the operational network controller.

Likewise, the network controller **32** may also contain the intelligence to be responsible for initializing the bus at startup, sending the initial commands and resetting all hardware. Additionally, the network controller may act as the master network controller, i.e., host computer **30,** at power-up, thus having the capability to issue a stream of preprogrammed commands to the network and return data through the network controller to the host computer. The network controller may also alter the message arguments of the preprogrammed commands from data provided by the host computer. Such an embodiment can permit processor-free, time-deterministic operation of the network while still permitting control information to be processed and passed to the network.

The network controller **32,** on the other hand, performs the functions of the host computer **30** when it passes control to the network controller. Because the network controller is capable of performing, and many times performs, the functions of the host computer, the following description of the network, including the functions of the host computer, will be described with reference only to the network controller. Additionally, although several of the functions of the network controller are performed either through hardware, such as state devices and/or Application Specific Integrated Circuits (ASIC), or through software, it should be noted that many hardware functions can be performed using software and vise versa.

In addition to the network controller **32** operating as the master network controller, i.e., host computer **30** in one embodiment, in another embodiment the network controller can be configured to operate as a remote device **36** on the network **25.** In this embodiment, the network controller can act as a NDI to another, subsystem host computer on the network **25.** In this embodiment, the network bus **34** provides an intersystem connection between the host computer and the subsystem host computer. As such, the various communications between the network controller and the remote devices discussed below may be performed either between the network controller and the remote devices or NDIs, or the network controller and other network controllers, acting as NDIs.

In addition to the capabilities of the NDI, operating as a remote device **36,** the network controller **32** adds additional memory capabilities that may not be available in the NDI. The NDI contains a set of memory, referred to as a Transducer Electronic Data Sheet (TEDS), that stores configuration and calibration data. Each network device, including each network controller, will contain a TEDS. Some of the memory areas included within the TEDS are not changeable by the user. Other areas are mandatory user areas for information such as logical and group addresses and an ASCII description area, and yet other areas are not mandatory. Advantageously, for a network controller operating as a remote device, this additional space can be used to access large blocks of memory, typically random access memory (RAM) and/or EEPROM memory, within the remote device's host computer. This allows the master network controller to access not only the stack memory, like on an NDI, but also the RAM and/or EEPROM memory locations in the remote device's (i.e., network controller acting as a NDI) host computer.

Because the network controller **32** of the present invention connects to the remote devices via a common network **25,** the network controller does not require dedicated connections to each remote device to control the network. The network controller instead uses an addressing scheme to assign and control each of the remote devices **36.** To operate the network, each remote device is assigned one or more addresses, including a logical address, global address and, if configured, one or more group addresses. A logical address is an address recognized by a single remote device that the network controller uses to direct a command, or request, to a particular remote device. A global address, on the other hand, is an address recognized by all of the remote devices on the network which the network controller uses to exchange universal data and commands. For example, the global address scheme permits the network controller to universally initialize or reset all of the remote devises. A group address is an address that can be recognized by a particular group of remote devices on the network which the network controller uses to exchange group data and commands. For example, the group address scheme permits the network controller to set up time deterministic triggers for groups of remote devices at various sample rates.

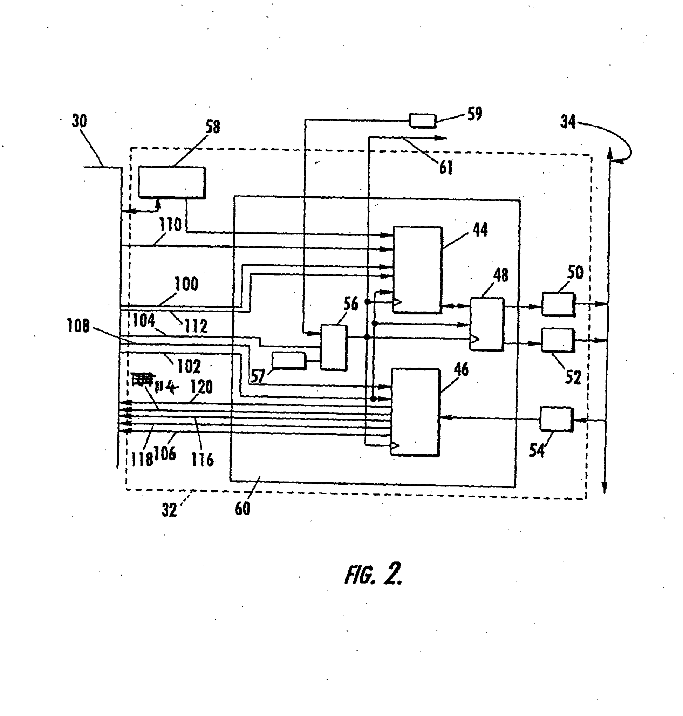

Referring now to FIG. 2, which depicts the network controller **32** electrically connected to a host computer **30** and a network bus **34.** The network controller can contain an optional memory device **58,** typically an EEPROM, RAM or Dual Ported RAM, that is electrically connected to the host computer. The memory device is designed to house a set of microcodes comprising control type commands for the network controller, such as timing schemes for collecting data from or providing data to the remote devices **36** connected to the network bus. In addition, the memory device is designed to house the network protocol commands for the remote devices, such as measuring data and transmitting data to the network controller. Optionally, the host computer can additionally select microcode commands **112** from the memory device for the network controller to perform. The network controller also includes a bus controller **44** that receives the microcodes, either from the memory device or the host computer, processes the microcodes and passes data when specified by the microcode.

The network controller further includes a bus clock generator **56.** The bus clock generator, running from either a local oscillator **57** or an external clock **59** in various embodiments, generates multiple timing signals that the network controller can use for various functions, such as logic operations, baud generation, synchronous clock generation and asynchronous message receiving. The local oscillator can be selected to run at a multitude of different frequencies. For example, in one embodiment, the local oscillator operates at a frequency of 80 MHz. Because many of the functions ofthe network controller that use the clock do not require such a high frequency, the bus clock generator divides the local oscillator frequency by a specified divisor, typically sixteen. This divided clock signal is available as an output signal **61** that can be used to synchronize the network controller **32** to another network controller, not shown. Similarly, the external clock input **59** can be used to synchronize the network controller with another network controller, not shown.

A controller transmitter **48,** electrically connected to the bus controller **44,** receives the data from the bus controller and formats the data into bit frames based on the communications protocol understood by the remote devices, such as a Manchester encoded Bi-Phase Sensor and System (BiSenSys) protocol. The BiSenSys protocol encodes messages by translating a voltage transition from a high state to low state as a binary "1" and a voltage transition from a low state to a high state as a binary "0." The controller transmitter then sends the bit frames, along with a clock signal, via a data transmitter **50** and a clock transmitter **52,** respectfully, to the network bus **34** and, eventually, the remote devices. A data receiver **54,** included within the network controller, receives message frames from the remote devices, through the network bus **34,** and passes the data to the network receiver **46.** The network receiver, in turn, processes the message frames, formats them from their encoded form and passes them to the host computer **30.** Additionally, the network receiver uses the various characteristics of the received message frames to determine any transmission errors within the message frames, such as message frame errors **120,** bi-phase encoding errors **114,** parity errors **116** and error flag errors **118.**

The elements of the network controller **32,** including the bus controller **44,** bus clock generator **56,** controller transmitter **48,** data transmitter **50,** clock transmitter **52,** data receiver **54** and network receiver **46** may be of a variety of types. But while they must all be compatible with one another, they can comprise any of a variety of typical such elements, such as is known to those skilled in the art. Additionally, however, the elements that send and receive data from the network bus, are selected based on the type of network implemented. For example, a physical layer such as RS-485, or TIA/EIA 485-A, standard half-duplex multidrop network allows multiple RS-485 compliant transmitters and receivers to reside on a single network line, with only one transmitter active at any given time. Additionally, the network controller can support a full duplex configuration network bus **34** where messages are simultaneously transmitted between the network controller and an active remote device **36.** Also, while the elements described and illustrated are separate from one another, they can be implemented in a single or in multiple combined elements, such as in a field programmable gate arms **60.**

The physical layer can consist of many different transfer configurations, including differential twisted pair copper wire, coaxial copper wire, fiber-optic cable and radio frequency transmission. Physical layers, such as the RS-485 standard, allow the network to support high speed bit transfer rates. But in embodiments where low bit rates are required, such as in the kilobit range, a single-ended copper network bus, with a common, ground return path may be used. In such embodiment, the controller transmitter **48** and network receiver **46** can be used to transmit messages and clock signals to and receive messages from the remote devices, and elements outside the field programmable gate array **60,** such as a separate data transmitter **50,** clock transmitter **52** and data receiver **54,** are not required.

As mentioned above, the network controller **32** of the present invention operates in conjunction with a protocol that allows remote devices to communicate over a simple and high-speed yet robust digital multi-drop network **25.** It must be understood that any applicable network protocol or physical layer, such as fiber-optic or wireless schemes, could be used in conjunction with the network controller of the present invention. However, described below is a particular protocol that provides several advantages whenused in the network **25** illustrated in FIG. 1. One important advantage being that the simplicity of the protocol allows the network controller to communicate with remote devices **36** comprising state machines, as opposed to high-level processors.

In operation, the network **25** runs in various formats and modes based on the command protocol and communication type implemented (i.e., synchronous or asynchronous). The command protocol format is determined by the command protocol compatible with the physical layer of the operational remote devices connected to the network, such as the Manchester encoded format or the format compatible with a Universal Asynchronous Receiver Transmitter (UART) physical layer, such as are known to those skilled in the art. It is not mandatory to support both the Manchester encoded format and UART physical layer on the network Selection of the format is set within the network controller **32** and can be selected using software.

Command and data messaging within the network protocol can be formatted to operate with both the Manchester encoding and UARTs. With the Manchester encoding, the network protocol comprises 18-bit message frames that include command frames and dataframes. Command frames are used to pass addresses and commands from the network controller to one or more remote devices. Each command frame consists of a command sync pattern, a 7-bit command word, a 10-bit address word and a parity bit. Data frames, can be used as arguments to command frames or responses from one or more remote devices issued in response to commands from the network controller. Each data frame consists of a data sync pattern, a 16-bit data word, an error flag bit and a parity bit. The error bit is used by the remote devices **36** to inform the network controller **32** of the occurrence of an error within the remote device. Once the network controller receives the error flag from the remote device, the network controller can either issue commands such as *Read Status Register,* discussed below, to the remote device to try and determine the nature of the error. Advantageously, the use of the error flag bit allows the network controller to receive output data from the remote devices along with the error flag, instead of only receiving an error notification, such as an error word. With the Manchester encoding, the network can operate at any data rate from DC - to a high bit rate such as 10 MHz or higher in synchronous mode or at several predetermined bit rates in asynchronous mode.

Distinguished from the Manchester encoding method, in UART mode, the network **25** is designed to typically operate at one bit rate and use non-return-to-zero (NRZ) bit coding. UART message frames contain three required 11-bit frames, including address, command and checksum frames, and two optional 11-bit frames, including number of data and data frames, utilized depending upon the command issued by the network controller. The first bit in every frame will be a start bit (set to "0"). The final bit of all frames is a stop bit (set to "1 "). Additionally, the tenth bit is used by all frames is used to identify the first frame of a message (i. e., the address frame).

The communication format implemented by the network **25** can include either synchronous or asynchronous communication, depending on the operational remote devices or control of the network controller. Using the Manchester encoding method, the communication format can be enabled by the network controller **32,** and automatically detected by the remote devices **36** monitoring the network for synchronous clock lines. The network, using the Manchester encoded method, can typically be used synchronously at any bit rate between DC - to a high bit rate such as 10 MHz or higher, and the network controller and remote devices can operate asynchronously at several predetermined bit rates, such as 10 K, 20K, 1.25M, 2.5M, 5M, and 10M bits/sec. The lower bit rates permit single-ended physical layers reducing wiring costs and transceiver costs. High bit rates in the Mbit/sec range require differential copper signaling, fiber-optic, coaxial, or some other high-integrity signaling physical layer. Using the UART physical layer, the network typically operates at 1.0 or 1.25 Mbits/sec.

With regard to the Manchester encoding method, in the synchronous mode, the clock generator **56** of the network controller provides a continuous synchronous clock signal. The synchronous clock signal is used by the remote devices of the present invention in the synchronous mode to clock in data from the network controller and to clock data out to the network controller.

With the Manchester encoding method, operating asynchronously, a synchronous clock signal is not transmitted, and the network controller **32** operates at a predetermined bit rate. During operation, the network controller may alternate between a synchronous and asynchronous mode. If the network controller changes to the asynchronous mode during operation, the bit rate is initially set at the lowest bit rate. The bit rate can then be changed using a *Baud Select* command, as described below. The remote devices **36** detect whether the network controller is operating in the synchronous or asynchronous mode by sensing whether the clock generator **56** is providing a synchronous clock signal, and adjusting their operation accordingly. If the network controller does alter the bit rate once the network enters asynchronous mode, the data transmitter **50** transmits data at the new bit rate to the remote devices. The remote devices, in turn, alter their output bit rate and send messages and data back to the data receiver **54** at the new bit rate. But before the data transmitter transmits operational commands to the remote devices, it may issue a null command to the remote devices to insure the remote devices resynchronize with the network controller at the new bit rate.

As described above, each remote device **36** is provided with a logical address that uniquely identifies the remote device. Further, there is a global address that addresses all channels of all remote devices, and multiple group addresses that address a number of remote devices. The global address is used for the exchange of global data and commands. The group address is an address that can be recognized by multiple remote devices and is used for the exchange of data and commands to a group or subset of remote devices on the network. Associated with the group address is a group mask stored in the remote device. The group mask is a 16-bit word, representing 16 predetermined network addresses, where each bit set to "1" represents an address of the group that the remote device belongs.

As an example, in one embodiment, the global address is assigned as 0000hex. In this embodiment, if the network controller **32** transmits the address 0000hex, all of the remote devices will follow the command. The network controller typically uses this command for service commands, triggering, resetting the system or testing the network **25.** Further, in one embodiment, the group addresses are selected in the range of 0001hex to 000fhex, representing the range available in the remote device's group mask. In this embodiment, when the network controller transmits an address in this range to a remote device **36,** the remote device will compare the group address with the group mask it has stored. If the bit in the group mask corresponding to the group address is set, the remote device will interpret and follow the command associated with the group address. For example, if the remote device has the group mask 100000001100bin stored, the remote device belongs to group addresses 000fhex, 0003hex, and 0002hex.

The group address scheme is designed to permit the network controller **32** to set up time-deterministic triggers for groups of remote devices **36** at various sample rates. Table 1 illustrates a group of sensors having different sample rates and their group assignments, and Table 2 illustrates the sequence for polling the sensors.

**Table 1**

| **Logical Address** | **Device** | **Sample Rate (Samples/sec)** | **Group Address** |
|---|---|---|---|
| 16 | Temperature 1 | 125 | 1 |
| 17 | Pressure 1 | 250 | 1,2 |
| 18 | Strain 1 | 500 | 1,2,3 |
| 19 | Strain 2 | 500 | 1,2,3 |
| 20 | Strain 3 | 500 | 1,2,3 |
| 21 | Strain 4 | 500 | 1,2,3 |
| 22 | Accelerometer 1 | 1000 | 1,2,3,4 |
| 23 | Accelerometer 2 | 1000 | 1,2,3,4 |
| 24 | Accelerometer 3 | 1000 | 1,2,3,4 |
| 25 | Accelerometer 4 | 1000 | 1,2,3,4 |

**Table 2**

| **Command Execution Time** | **Action** |
|---|---|
| 0 | Issue Trigger Command to Address 1 |
| | Poll Addresses 16 through 25 |
| 1 msec | Issue Trigger Command to Address 4 |
| | Poll Addresses 22 through 25 |
| 1 msec | Issue Trigger Command to Address 3 |
| | Poll Addresses 18 through 25 |
| 1 msec | Issue Trigger Command to Address 4 |
| | Poll Addresses 22 through 25 |
| 1 msec | Issue Trigger Command to Address 2 |
| | Poll Addresses 17 through 25 |
| 1 msec | Issue Trigger Command to Address 4 |
| | Poll Addresses 22 through 25 |
| 1 msec | Issue Trigger Command to Address 3 |
| | Poll Addresses 18 through 25 |
| 1 msec | Issue Trigger Command to Address 4 |
| | Poll Addresses 22 through 25 |
| 1 msec | Restart Sequence |

With regard to the group addresses, if the network controller **32** sends out a group address, the remote device will decode the address portion of the command and compare the group address to the group mask stored in the remote device. If the group mask indicates that the remote device is a member of the group address, the remote device will perform the command associated with the group address.

As stated previously, the network controller of the present invention operates in conjunction with a selected protocol. In one embodiment, this protocol is designed to insure low-level communication control interfaces, (i.e., network controllers **32** and remote devices **36**). This protocol makes possible the development of controller and network interfaces that are highly miniaturized within the network **25.** If the network controller and remote devices are implemented using an ASIC, in conjunction with the protocol, the network controller and remote device can respond quickly and efficiently allowing for maximized bus efficiency.

The protocol of the present invention also has a low overhead command structure. It does not use affixed length message. The length of the message varies depending on the command. This, in turn, permits the elimination of unnecessary data being transmitted, if it is not needed to execute a function. In addition, the command set associated with the protocol is minimal and straightforward allowing the user to easily pass data through the network bus **34** with minimal manipulation.

Generally, the commands included within the command set of the protocol fall into three broad categories, service commands, data commands and memory commands. Many of the commands of the network protocol are described below in Table 3. It should be noted, however, that the description ofthe commands below are intended to be illustrative, and not exhaustive, of the commands within the command set the network controller and remote devices can interpret. Some of the described commands may not be implemented in some embodiments, and other commands may be used in other embodiments, without departing from the spirit and scope of the present invention. A detailed disclosure of the commands directed at remote device processing is also provided in U.S. Provisional Patent Application Number 60/254,136 entitled: NETWORK INTERFACE DEVICE FOR DIGITALLY INTERFACING REMOTE DEVICES TO A CONTROLLER VIA A NETWORK and filed on December 8, 2000, and U.S. Patent, 6,708,239 entitled: NETWORK DEVICE INTERFACE FOR DIGITALLY INTERFACING DATA CHANNELS TO A CONTROLLER VIA A NETWORK.

**Table 3**

| **Command (hex)** | **Command Description** |
|---|---|
| **Service Commands** | |
| 00 | No Op |
| 01 | Built in Test |
| 02 | Reset |
| 03 | Read Status Register |
| 04 | Device Inventory Enable |
| 05 | Device Inventory |
| 06 | Control Pass |
| 07 | Wake |
| 08 | Sleep |
| 09 | E-Calibration |
| 0A | Z-Calibration |
| 0B | Synchronize |
| 0C | Baud Select |
| 0D-0F | Reserved |
| | |

| **Data Commands** | |
|---|---|
| 20 | Trigger |
| 21 | Trigger and Read |
| 22 | Read In Data Register Word |
| 23 | Read In-Data Stack Word |
| 24 | Read In-Data Stack Block |
| 25 | Query In Date/Out-Data Stack Depth |
| 26 | Write Out-Data Stack Word |
| 27 | Write Out-Data Stack Word/Echo to In-Data Register |
| 28 | Write Out-Data Stack Block |
| 29-2F | Reserved |
| | |

| **Command (hex)** | **Command Description** |
|---|---|
| **Memory Commands** | |
| 30 | Set Memory Pointer |
| 31 | Read Memory Word with Current Pointer |
| 32 | Read Memory Block with Current Pointer |
| 33 | Write Memory Word with Current Pointer |
| 34 | Write Memory Block with Current Pointer |
| 35 | Read Memory Word with Passed Pointer |
| 36 | Read Memory Block with Passed Pointer |
| 37 | Write Memory Word with Passed Pointer |
| 38 | Write Memory Block with Passed Pointer |
| 39-7F | Reserved |

As described previously, the host computer **30,** by default, issues many commands **110** directly to the network **25,** including initializing the network bus **34** at startup, sending the initial commands and resetting all hardware. The host computer may also send commands and receive responses directly from the network. Likewise, as previously stated, the network controller **32** may also contain the intelligence to be responsible for initializing the bus at startup, sending the initial commands and resetting all hardware. Also, the network controller **32** may act as the master network controller, i.e., host computer, at power-up, thus having the capability to issue a stream of preprogrammed commands to the network and return data through the network controller to the host computer **30.** Additionally the network controller **32** may alter the message arguments of the preprogrammed commands from data provided by the host computer **30.** Such an embodiment can relieve the processor of consuming tasks and permit processor free time-deterministic operation of the network while still permitting control information to be processed and passed to the network.

In one embodiment, control of the network can be passed temporarily from the host computer **30** or network controller **32** to a remote device **36** that has the capability of network control (and that may also be controlled by a host computer) using a *Control Pass* command. This permits other devices on the network bus **34** to issue commands and receive responses without the network controller **32** scheduling the commands. Such an application would be useful for remote devices capable of network control that need to acquire or pass significant information that is unique and not necessary for the network controller. The network controller has the capability of regaining control by issuing a *Reset* command which would perhaps conflict with traffic on the network bus, but would cause the remote device with temporary control to become silent, and allow the remote device to receive another *Reset* command indicating loss of control.

In order for the network controller **32** to have full control over the remote devices **36,** the network protocol includes several service commands, including several testing commands, such as *Built-in-Tests, E-Calibration* and *Z-Calibration.* To maintain remote devices and allow them to check their internal circuitry, the network controller can issue a *Built-in-Tests* command to the remote devices. While the network controller controls when these tests are performed, the remote device manufacturer defines the nature and scope of the tests performed by each remote device. The network controller uses the *E-Calibration* and *Z*-*Calibration* commands to generate a calibration measurement in the remote devices. Issuing an *E-Calibration* command, the network controller initiates the remote device to replace its input with a known reference voltage and take a measurement using the *Trigger* command, described below. Similarly, when the network controller issues a Z-*Calibration* command, the remote device shorts out its input and takes a measurement using the *Trigger* command. These commands allow the network controller to compare a known measurement against the actual value measured by the remote devices during the test. Additionally, these commands may also permit the initiation of an autocalibration procedure built in to the remote device setting the devices to a predetermined calibration when instructed.

Also included within the service commands are *No Op, Reset, Read Status Register, Wake, Sleep* and *Synchronize* commands. The network controller issues the *No Op* command to the remote devices, typically along with another command, to instruct the remote devices to take no action or generate any response. When the network controller **32** wants to initialize the remote devices **36** to their power-up state, the network controller issues a *Reset* command **102.** This command is used by the network controller to reset the network bus **34** and remote devices when necessary, and used by the host computer **30** and/or network controller to regain control of the network from another host computer and/or network controller that has temporary control of the network. Additionally, this command can be used by a remote device manufacturer to perform other resetting functions within a remote device.

To access the status of a remote device, or multiple remote devices, the network controller issues a *Read Status Register* command to the remote devices. In response to this command, the selected remote devices will transfer the contents of its status register to the network controller indicating the status of the remote device, such as device not ready error, device does not support command error, message transmission error, invalid argument error or that a built-in-test has been performed since the last status read.

To control the power draw of the remote devices **36** on a network **25** equipped with current limited power leads, the network controller will issue *Wake* and *Sleep* commands to the remote devices. The network controller **32** uses the *Wake* command to wake up a remote device in power down mode. After receiving this command, the remote device will return to normal operating mode. To put a device in power down mode, the network controller issues a *Sleep* command. This command will cause a remote device that will not be interrogated by the network bus **34** for a significant amount of time to reduce power draw from the network.

Some remote devices use oversampling techniques such as Sigma-Delta converters to acquire data. To synchronize the acquisition of oversampling devices using the clock generator **56** of the network controller **32,** the network controller issues a *Synchronize* command. When issued, the selected remote devices synchronize their data acquisition on the next synchronous clock edge following the changing center edge of the parity bit in the trigger command message. If the device has an internal clock signal for running the Sigma-Delta converter that is synchronous with the clock generator signal, butis some fraction of the bus clock signal, the remote device will align itself with the clock generator signal. This will allow multiple remote devices to run substantially synchronously. If the sample and hold do not occur at this time, the remote device manufacturer will define the delay in clock cycles of the remote device.

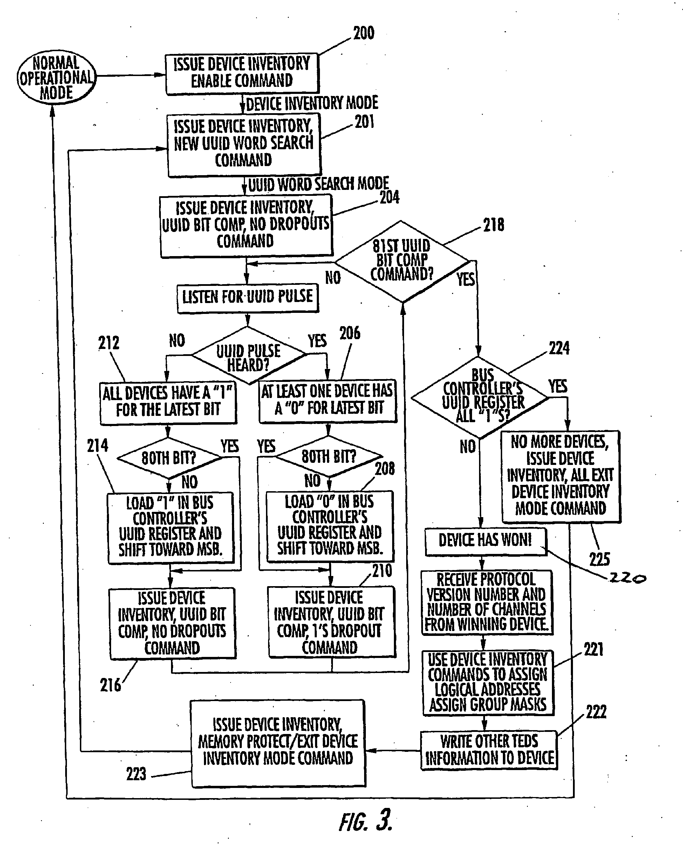

As mentioned above, the network controller **32** addresses each of the remote devices by a logical, group and global addressing scheme. To begin implementation of the network **25,** the network controller **32** inventories the remote devices **36** on the network and assigns the logical and, if configured, group addresses to those devices. Although the network controller can perform the inventorying and addressing by any conventional method, it typically performs such functions via a device inventory session. Using the Manchester encoded method, the network controller performs the device inventory session using a universal unique identifier (L7UID) stored on each remote device, as illustrated in FIG. 3. Every remote device, at the time of manufacture, is assigned a UUID code that is derived by each device's manufacturer based on a defined set of criteria. The UUID consists of an 80-bit code that is used as a unique identifier that no other devices can posses. Due to the excessive length of the UUID, however, it is too long for the network to implement in the addressing scheme for the remote devices. UART compliant devices can contain a UUID, however, they cannot perform a device inventory. Therefore, in UART mode, the network controller individually assigns logical and group addresses to UART compliant remote devices as those devices are connected to the network.

During the device inventory session using the Manchester encoded format, the network controller **32** determines the UUIDs of the each remote device **36** by performing a UUID word search. The UUID word search, in turn, includes what is known as a bit competition to ensure that the network controller receives and assigns addresses to only one particular UUID at a time.

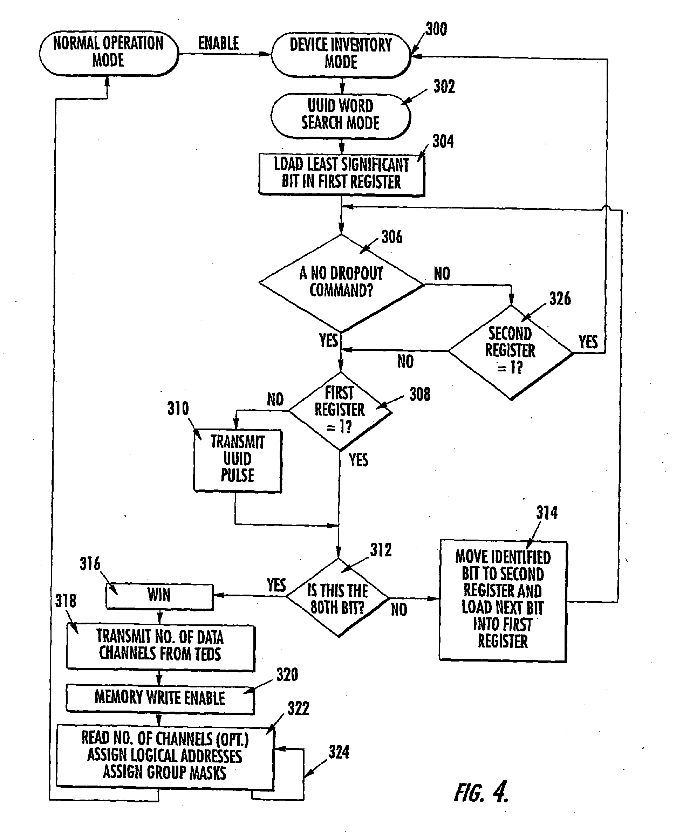

A device inventory session, begins with the network controller issuing a *Device Inventory Enable* command with a global address or a group of addresses (from a previous device inventory). At this point all devices within the address group are in device inventory mode. Once in the device inventory mode, the address field in the command frame becomes a function code field (hereinafter function codes will be represented in parenthesis after its respective command) as illustrated in FIG. 2 and blocks **200** and **300** of FIGS. 3 and 4, respectively. The network controller then issues a *Device Inventory (New UUID Word Search)* command to the remote devices indicating that the session is beginning a new UUID word search, as illustrated in block **201** of FIG. 3 and block **302** of FIG. 4. Then, the network controller begins the bit competition by issuing *Device Inventory (UUID Bit Competition, No Dropouts)* command, instituting what is known as a "No Dropout" function wherein the devices identify and evaluate the least significant bit of their respective UUIDs, as shown in block **204** of FIG. 3 and blocks **304** and **306** of FIG. 4. If the identified bit is a "0," the remote device transmits a pulse on the network **106** to the network controller, as shown in FIG. 2 and blocks **308** and **310** of FIG. 4. If a pulse is detected on the network and the current bit is not the eightieth bit (80) (i.e., the most significant UUID bit), the network controller stores the signal as a "0" in a UUID memory location, as shown in blocks **206** and **208** of FIG. 3 and block **312** of FIG. 4. If the remote device's current bit is a "1," the remote device doesn't send a pulse to the network controller. If no remote devices send a pulse to the network controller and the identified bit is not the eightieth bit, the network controller stores a "1" in the UUID memory location, as illustrated in blocks **212** and **214.** While the UUID memory location can comprise any conventional device that is capable of at least temporarily storing values, it typically comprises a shift register.

After the remote devices **36** evaluate the identified bit, each remote device shifts the identified bit into a secondary location and identifies its next least significant UUID bit, as illustrated in block **314** of FIG. 4. If the network controller **32** has stored a " 1" in the UUID memory location, the network controller reissues the *Device Inventory (UUID Bit Competition, No Dropout)* command to the remote devices, as illustrated in block **216** of FIG. 3. The remote devices then repeat the process identified above depending upon whether the newly identified bit is a "0" or "1." If, on the other hand, the network controller has stored a "4" in the UUID memory location, the network controller issues what a *Device Inventory (UUID Bit Competition, 1's Dropout)* command, initiating what is known as a "1's Dropout" function to the remote devices, as shown in block **210** of FIG. 3 and block **326** of FIG. 4. If a remote device's bit stored in the secondary location is a "1," the remote device exits the bit competition and waits for a *New UUID Word Search* command to reenter the competition, as shown in block **326.** If the remote device's bit stored in the secondary location is a "0," the remote device evaluates its newly identified bit, following the procedure described above. The procedure then continues with each of the remote devices' UUID bits, completing 81 iterations of the procedure to allow for the winning remote device to determine it won the bit competition, as shown in blocks **218** and **220.**

As each remote device's UUID is found by winning the bit competition, as shown in block **316** of FIG. 4, the remote device **36** is assigned its logical and group addresses which are stored along with any desired TEDS information needed in the remote device, as illustrated in blocks **221** and **222** of FIG. 3 and blocks **318-324** of FIG. 4. This information is typically stored in a memory device, such as an EEPROM, on the remote device. The network controller **32** then issues the *Device Inventory (protect*/*Exit Device Inventory Mode)* command which causes the winning remote device to exit the device inventory session, as shown in block **223** of FIG. 3.

The network controller then starts the procedure over, as illustrated in block **201,** until all devices have been identified. The network controller recognizes when all of the devices have been recognized when all 80 bits in the bus controller's UUID register are "1's," as shown in block **224.** When the UUID of every remote device on the network **25** has been searched and determined, the network controller **32** will issue *a Device Inventory (All Exit Device Inventory)* command and, thus, complete the inventory, as illustrated in block **225.** Typically, the device inventory session will only have to be completed once the network is assembled or changed. But a device inventory session can be run at any time to verify the network configuration or to insure the network is configured.

As described previously, the network **25** is capable of operating at different baud rates. When operating in asynchronous mode, the network will default to the lowest baud rate configured for the network. The network controller **32** can change the baud rate of data transmission by issuing a *Baud Select* command **108,** as shown in FIG. 2. To insure the remote devices **36** resynchronize at the new communication speed with the network controller, the network controller must issue a *No Op* command following the *Baud Select* command. Once the network controller **32** has inventoried and assigned addresses to the remote devices **36,** the network controller can issue commands to the remote devices to send data to and receive data from those devices.

In order for the network controller **32** to have full control over the remote devices **36,** the network protocol includes several data acquisition and control commands, such as *Trigger, Trigger and Read, Read In-Data Register Word, Read In-Data Stack Word, Read In-Data stack Block, Query In-Data*/*Out-Data Stack Depth, Write Out-Data Stack Word, Write Out-Data Stack Word*/*Echo to In-Data Register and Write Out-Data Stack Block.* These commands are used to address a sequential type of memory in remote devices that resembles a stack of memory that is accessed by pushing data on or popping data off of the top of a stack of memory locations. To initiate an incoming data measurement in a sensor or move a value to an output in an actuator in all devices that belong to a logical and/or group address, the network controller will issue a *Trigger* command to those devices. Following a data measurement, if the network controller wants to receive the measurements taken by the remote devices, the network controller will issue a *Read In-Data Stack Word* command to each of those devices. If multiple trigger commands are issued to the remote devices, the *Read In-Data stack Block* command issued to each device will return the multiple measurements taken. Additionally, along with receiving data from remote devices, the network controller can additionally write data to the remote devices by issuing a *Write Out-Data Stack Word, Write Out-Data Stack Word*/*Echo to In-Data Register, or Write Out-Data Stack Block* command. It should also be noted that even though a *Read* command typically follows a *Trigger* command, the network controller can issue the *Read* command at any time as long as the remote device has a data value stored within it. *Trigger* commands typically follow a write command to the remote device, which then cause the output of the remote device to be updated with the value or group of values of the previous *Write Out-Data* commands.

To initiate a measurement cycle in a remote device **36** and immediately transmit the results of the previous measurement cycle onto the network bus **34,** the network controller **32** will issue a *Trigger and Read* command. Because the network **25** generally only supports data transmission from a single remote device at any given time, *Trigger and Read* commands are generally limited to unique logical addresses only, and will not use group addressing. To determine how many valid data words are stored in a selected remote device, the network controller will issue a *Query In-Data*/*Out-Data Stack Depth* command to a specific logical address. The remote device, in turn, responds by transmitting to the network bus the number of valid words stored.

In addition to reading or writing to a data stack on the remote device **36,** the network controller **32** can additionally read from or write to the memory of the remote devices by issuing a number of random access memory commands, including *Read Memory and Write Memory* commands. This memory can represent many different memory locations, such as the mandatory TEDS information contained within the remote device or additional memory space within the remote devices host computer. The network controller can read from the memory of a remote device by issuing a *Read Memory* command. To read a length of memory, either a word or block, the network controller will issue a *Read Memory Word with Passed Pointer* command and additionally specify the memory location. Additionally, the network controller can set the remote devices memory pointer by issuing a *Set Memory Pointer* command and then issue a *Read Memory Word with Current Pointer* command. Likewise, the network controller can write to either a word or block of memory on a remote device by issuing a *Write Memory Block with Passed Pointer* command and additionally specify the memory location. Additionally, the network controller can set the remote devices memory pointer by issuing a *Set Memory Pointer* command and then issue a *Write Memory Block with Current Pointer* command.

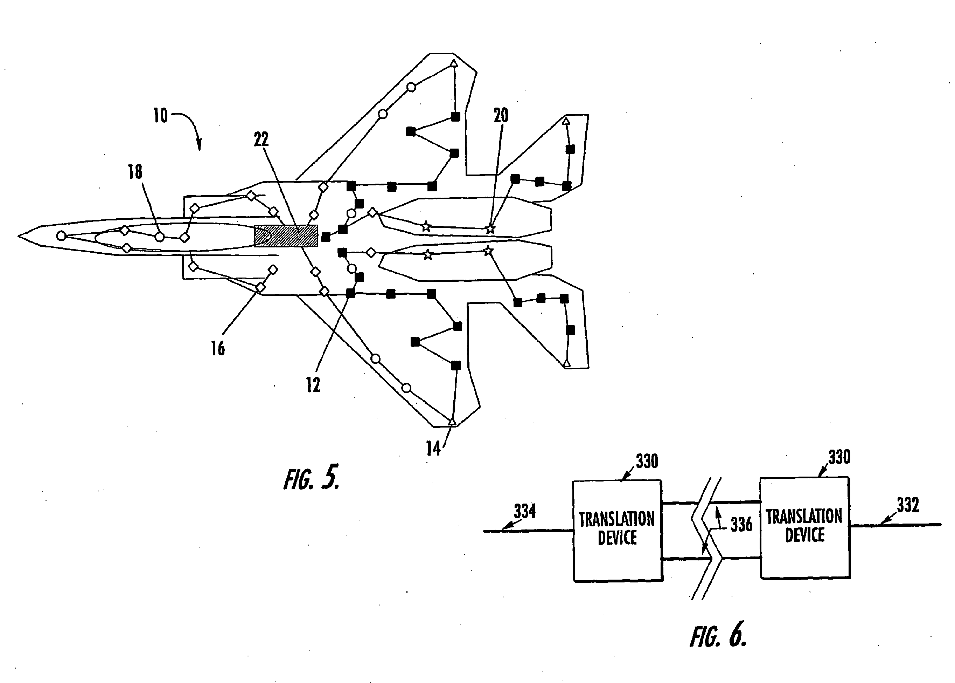

Referring now to FIG. 5, as previously stated, the avionics industry provides a typical application of the network controller. For example, the network controller **22** can be used on an aircraft **10** to control and monitor actuators and sensors. The aircraft can use the network to monitor various critical structural locations for strains **12,** such as wing root, wing surface, tail root, tail cord and landing gear strains, and accelerations **14,** such as wing tip and tail tip accelerations. Additionally, the network can be used to monitor the pressure **16** at various critical structural locations, such as critical belly pressures for sonic fatigue, as well as key corrosion locations **18** for radar, landing gear and leading edges, and engine casing temperatures **20.**

The network controller of the present invention therefore allows network components to communicate over an inexpensive, simple and high-speed, yet robust, network line with a simple message protocol, small component size and low wire count. The network controller can also advantageously operate without the use of a microcontroller or processor for the network components using either a Manchester encoding or UART command protocols, thereby reducing the overhead associated with an associated host processor and allowing the entire network to run via the controller's single clock signal. Also, the network controller supports both acquisition and control, acquires dita simultaneously from the components and operates with synchronized data samples from the components. The network controller can be used for efficient, time-deterministic, high-speed acquisition and control, and intersystem data transfer. Further, the network controller allows for high component counts, longer network lines and insures time determinism in a precise manner.

As illustrated in FIG. 5, the network controller of the present invention may be implemented in a monitoring system for monitoring various portions of an obj ect, such as an aircraft or automobile. In some embodiments, such as in an aircraft, the various sensors and actuators of the monitoring system may be spread throughout the aircraft at different locations of interest. For example, in some applications, the monitoring system may include a first set of sensors and actuators located about or near the tail of the aircraft, a second set at or about the wings, and a third at or about the cockpit, with an elongated network bus line between the sets of sensors and actuators.

As discussed previously, however, the use of metallic wiring, such as wiring made ofcopper, has some drawbacks due to DC resistance thatmay degrade commands and data transmitted on the network bus. This problem with metallic wiring may become troublesome in instances where there are elongated spans between, for example, the first set of sensors and actuators located at the tail of the aircraft and the second set of sensors and actuators located at the wing of the aircraft. Specifically, an elongated metallic wiring acting as the bus link between these two sets of sensors and actuators may degrade command and data communication on the bus.

In light of this, with reference to FIG. 6, in one embodiment, the present invention provides a translation device **330** that transitions from metallic wiring used by the network bus to connect the sensors and actuator of the first set located at the wing to metallic wiring used to interconnect the sensors and actuators of the second set located at the wing or cockpit using a fiber optic cable. This is advantageous because fiber optic cable typically does not degrade signals significantly as they propagate along its length, thereby allowing the first and second sets of sensors and actuators to be spaced relatively far apart without concerns of signal degradation during propagation across the distance between the first and second sets.

For example, FIG. 6 illustrates a first metallic line **332** that is connected to a first set of sensors and actuators located at a position of an object and a second metallic line **334** connected to a second set of sensors and actuators located at a different position on the object. Connecting the first and second metallic wiring is a set of fiber-optic cables **336** or similar type cables that minimally degrade signals due to length. Between the fiber-optic cables and each copper wire is a translator device **330** for transitioning the signals propagating on the metallic line into optic signals and vice versa.

Importantly, in this illustrative embodiment, the metallic lines are a half-duplex bus, while the fiber-optic cable is full-duplex. In light of this, not only do the translation devices of the present invention transition the commands and data present on the network bus to optical data for transmission across the fiber-optic cable, but they may also translate the commands and data from a half-duplex system to a full-duplex system and vice versa. In this embodiment, the translation devices of the present invention may include an RS-485 transducer for receiving and transmitting data. Connected to the transducer is logic that translates the commands and data located on the network bus between half and full-duplex for transmission across the fiber-optic cable and copper wires.

## Claims

1. A network controller (32) for digitally directing communications with a plurality of remote devices (36) via a common bus (34), the network controller comprising:
a transmitter (50) for digitally transmitting messages via the common bus;
a receiver (54) for receiving digital messages from the common bus;
a clock (56) for providing clock signals; and
a clock transmitter (52) for digitally transmitting the clock signals via the common bus,
wherein both said transmitter (50) and receiver (54) are capable of selectively operating in either mode selected from the group consisting of a synchronous mode and an asynchronous mode, wherein said transmitter (50) transmits both messages and the clock signals via the common bus in the synchronous mode, and wherein said transmitter (50) transmits messages at a predetermined bit rate without any accompanying clock signals via the common bus (34) in the asynchronous mode, **characterized in that** said transmitter (50) is capable of altering the predetermined bit rate at which messages are transmitted while communicating with the plurality of remote devices (36); and
that said receiver (54) is capable of receiving messages as said transmitter (50) alters the predetermined bit rate without relying upon any clock signals.

2. A network controller (32) according to Claim 1, wherein said clock (56) receives a baud select command that defines the predetermined bit rate at which said transmitter (50) will transmit messages in the asynchronous mode.

3. A network controller (32) according to Claims 1 or 2, wherein said network controller (32) is capable of commanding a remote device (36) to at least temporarily direct the communication with the other remote devices (36) via the common bus (34).

4. A network controller (32) according to any of Claims 1-3 wherein said receiver (54) asynchronously receives, messages from the common bus (34).

5. A network controller (32) according to any of Claims 1-4 wherein the common bus (34) is selected from a group consisting of differential twisted copper wire, coaxial copper wire, fiber-optic cable and single-ended copper wire.

6. A network controller (32) according to any of Claims 1-5 wherein the network controller (32) is capable of selectively operating in either communication mode selected from the group consisting of a half-duplex communication mode and a full-duplex communication mode.

7. A network controller (32) according to any of Claims 1-6 wherein said network controller (32) is capable of acting as a remote device while another, master network controller directs communications with the plurality of remote devices, including the network controller, via the common bus (34).

8. A network controller (32) according to any of Claims 1-7, wherein said network controller (32) is capable of interacting with a host computer having stack memory and random access memory (RAM), wherein when said network controller (32) is acting as a remote device, the master network controller is capable of selectively accessing either type of memory selected from the group consisting of the stack of sequential memory and the RAM.

9. A network controller (32) according to Claim 1, wherein said transmitter (50) transmits an example message to the at least one remote device (36) at an altered bit rate following alteration of the predetermined bit rate.

10. A network controller (32) according to Claim 1 or 9, wherein said transmitter (50) receives a baud select command that defines the predetermined bit rate at which the messages will be transmitted.

11. A network controller (32) according to any of Claims 1-10, wherein both said transmitter (50) and receiver (54) are capable of selectively operating in accordance with any command protocol selected from the group consisting of Manchester encoding and Universal Asynchronous Receiver Transmitter (UART) protocol, wherein said transmitter (50) and receiver (54) are responsive to a command protocol select command that identifies the command protocol according to which the plurality of remote devices (36) are capable of communicating such that said transmitter (50) and receiver (54) thereafter transmit and receive messages, respectively, in accordance with the command protocol identified by the protocol select command.

12. A network controller (32) according to any of Claims 1-11 wherein said transmitter (50), while operating in accordance with the Manchester encoding command protocol, transmits messages according to the Manchester encoding command protocol, and wherein said transmitter (50) transmits Manchester encoded messages according to a mode selected from the group consisting of a synchronous mode and an asynchronous mode.

13. A network controller (32) according to any of Claims 1-12 wherein said transmitter (50) transmits Manchester encoded messages comprised of a sync portion, a message body and a parity flag.

14. A network controller (32) according to any of claims 1-13 wherein said transmitter (50) transmits messages according to the UART protocol at a predetermined bit rate and utilizing a non-return-to-zero (NRZ) bit format.

15. A network controller (32) according to any of Claims 1-14 wherein said transmitter (50), while operating in accordance with the UART command protocol, transmits an idle pattern to reset the plurality of remote devices prior to transmitting each message.

16. A network controller (32) according to any of Claims 1-15, wherein:
said transmitter (50) adapted to transmit messages comprising a command and an address of at least one remote device, said transmitter (50) being further adapted to simultaneously transmit messages to a plurality of remote devices (36) in accordance with a group address comprised of a plurality of bits with each bit associated with a respective group, thereby enabling said transmitter to direct a message to a group of remote devices (36) by setting the respective bit of the group address.

17. A network controller (32) according to Claim 16 wherein said transmitter (50) is also adapted to transmit messages to individual remote devices in accordance with a unique logical addresses assigned to the plurality of remote devices (36).

18. A network controller (32) according to Claim 16 or 17 wherein said transmitter (50) is also adapted to transmit messages to all of the plurality of remote addresses in accordance with a global address.

19. A network controller (32) according to any of Claims 1-18, wherein the transmitter (50) is capable of transmitting an indefinitely repeating sequence of predetermined messages via the common bus (34), the receiver (54) is capable of receiving an indefinitely repeating sequence of messages from the common bus (34), and wherein the network controller (32) is capable of altering the predetermined messages as the transmitter (50) transmits messages and the receiver (54) receives messages.

## Patentansprüche

1. Netzwerksteuerung (32) für die digitale Lenkung von Kommunikation mit mehreren entfernt angeordneten Geräten (36) über einen gemeinsamen Bus (34), wobei Netzwerksteuerung folgendes umfasst:
einen Sender (50) zum digitalen Senden von Nachrichten über den gemeinsamen Bus;
einen Empfänger (54) zum Empfangen von digitalen Nachrichten von dem gemeinsamen Bus;
einen Taktgeber (56), der Taktsignale bereitstellt, und
einen Taktsender (52) zum digitalen Senden der Taktsignale über den gemeinsamen Bus,
wobei sowohl der Sender (50) als auch der Empfänger (54) wahlweise in einem der Modi arbeiten kann, der aus der Gruppe von Modi ausgewählt ist, die aus einem synchronen Modus und einem asynchronen Modus besteht, wobei der Sender (50) in dem synchronen Modus sowohl Nachrichten als auch die Taktsignale über den gemeinsamen Bus sendet, und wobei der Sender (50) in dem asynchronen Modus Nachrichten mit einer vorab festgelegten Taktrate ohne jegliche begleitenden Taktsignale über den gemeinsamen Bus (34) sendet, **dadurch gekennzeichnet, dass** der Sender (50) die vorab festgelegte Bitrate verändern kann, mit der Nachrichten gesendet werden, während er mit den mehreren entfernt angeordneten Einrichtungen (36) kommuniziert, und
dass der Empfänger (54) Nachrichten empfangen kann, während der Sender (50) die vorab festgelegte Bitrate verändert, ohne dass er auf irgendwelche Taktsignale angewiesen ist.

2. Netzwerksteuerung (32) nach Anspruch 1, bei der der Taktgeber (56) einen Baudraten-Auswahlbefehl empfängt, der die vorab festgelegte Bitrate definiert, mit der der Sender (50) Nachrichten in dem asynchronen Modus senden wird.

3. Netzwerksteuerung (32) nach Anspruch 1 oder 2, wobei die Netzwerksteuerung (32) einer entfernt angeordneten Einrichtung (36) Befehle erteilen kann, die wenigstens zeitweise die Kommunikation mit den anderen entfernt angeordneten Einrichtungen (36) über den gemeinsamen Bus (34) lenken.

4. Netzwerksteuerung (32) nach einem der Ansprüche 1 bis 3, bei der der Empfänger (54) Nachrichten asynchron von dem gemeinsamen Bus (34) empfängt.

5. Netzwerksteuerung (32) nach einem der Ansprüche 1 bis 4, bei der der gemeinsame Bus (34) aus einer Gruppe ausgewählt ist, die aus verdrillten Kupferkabeln für differenzielle Signalübertragung, Koaxialkabel aus Kupfer, faseroptischem Kabel und Kupferkabel für die unsymmetrische Signalübertragung besteht.

6. Netzwerksteuerung (32) nach einem der Ansprüche 1 bis 5, wobei die Netzwerksteuerung (32) wahlweise in einem der Kommunikationsmodi arbeiten kann, der aus der Gruppe ausgewählt ist, die aus einem Halbduplex-Kommunikationsmodus und einem Vollduplex-Kommunikationsmodus besteht.

7. Netzwerksteuerung (32) nach einem der Ansprüche 1 bis 6, wobei die Netzwerksteuerung (32) als entfernt angeordnete Einrichtung arbeiten kann, während eine andere, übergeordnete Netzwerksteuerung die Kommunikation zu den mehreren entfernt angeordneten Einrichtungen, einschließlich der Netzwerksteuerung, über den gemeinsamen Bus (34) lenkt.

8. Netzwerksteuerung (32) nach einem der Ansprüche 1 bis 7, wobei die Netzwerksteuerung (32) mit einem Hostrechner mit einem Stapelspeicher und einem Speicher für zufälligen Zugriff (RAM) kommunizieren kann, wobei, während die Netzwerksteuerung (32) als eine entfernt angeordnete Einrichtung arbeitet, die übergeordnete Netzwerksteuerung selektiv auf einen der Speichertypen zugreifen kann, der aus der Gruppe ausgewählt ist, die aus dem Stapel aus sequenziellem Speicher und dem RAM besteht.

9. Netzwerksteuerung (32) nach Anspruch 1, bei der der Sender (50) auf die Veränderung der vorab festgelegten Bitrate folgend eine Beispielnachricht zu wenigstens einer entfernt angeordneten Einrichtung (36) mit einer veränderten Bitrate sendet.

10. Netzwerksteuerung (32) nach Anspruch 1 oder 9, bei der der Sender (50) einen Baudraten-Auswahlbefehl empfängt, der die vorab festgelegte Bitrate definiert, mit der die Nachrichten gesendet werden.

11. Netzwerksteuerung (32 nach einem der Ansprüche 1 bis 10, bei der sowohl der Sender (50), als auch der Empfänger (54) selektiv einem Befehlsprotokoll entsprechend arbeiten können, das aus der Gruppe ausgewählt ist, die aus Manchester-Kodierung und Universellem Asynchronem Sender-Empfänger (UART, Universal Asynchronous Receiver Transmitter)-Protokoll besteht, wobei der Sender (50) und der Empfänger (54) auf einen Auswahlbefehl für das Befehlsprotokoll reagieren, der das Befehlsprotokoll angibt, entsprechend dem die mehreren entfernt angeordneten Einrichtungen (36) kommunizieren können, sodass danach der Sender (50) und der Empfänger (54) Nachrichten entsprechend dem Befehlsprotokoll, das von dem Auswahlbefehl für das Protokoll angegeben wurde, senden beziehungsweise empfangen.

12. Netzwerksteuerung (32) nach einem der Ansprüche 1 bis 11, bei der der Sender (50), während er nach dem Befehlsprotokoll der Manchester-Kodierung arbeitet, Nachrichten entsprechend dem Befehlsprotokoll der Manchester-Kodierung sendet, und bei der der Sender (50) Manchester-kodierte Nachrichten entsprechend einem Modus sendet, der aus der Gruppe ausgewählt ist, die aus einem synchronen Modus und einem asynchronen Modus besteht.

13. Netzwerksteuerung (32) nach einem der Ansprüche 1 bis 12, bei der der Sender (50) Manchester-kodierte Nachrichten sendet, die einen Synchronisationsabschnitt, einen Nachrichtenkörper und ein Paritätsbit umfassen.

14. Netzwerksteuerung (32) nach einem der Ansprüche 1 bis 13, bei der der Sender (50) Nachrichten nach dem UART-Befehlsprotokoll mit einer vorab festgelegten Bitrate sendet und ein Keine-Rückkehr-zum-Nullwert (NRZ, Non-Return-to-Zero)-Bitformat nutzt.

15. Netzwerksteuerung (32) nach einem der Ansprüche 1 bis 14, bei dem der Sender (50), während er entsprechend dem UART-Befehlsprotokoll arbeitet, ein Leerlauf-Bitmuster sendet, das die mehreren entfernt angeordneten Einrichtungen zurücksetzt, bevor jede Nachricht gesendet wird.

16. Netzwerksteuerung (32) nach einem der Ansprüche 1 bis 15, bei dem:
der Sender (50) dazu eingerichtet ist, Nachrichten zu senden, die einen Befehl und eine Adresse von wenigstens einer entfernt angeordneten Einrichtung umfassen, wobei der Sender (50) weiter dazu eingerichtet ist, gleichzeitig Nachrichten an mehrere entfernt angeordnete Einrichtungen (36) entsprechend einer Gruppenadresse zu senden, die mehrere Bit umfasst, wobei jedes Bit einer jeweiligen Gruppe zugeordnet ist, wodurch dem Sender ermöglicht wird, eine Nachricht an eine Gruppe von entfernt angeordneten Einrichtungen (36) zu lenken, indem das entsprechende Bit der Gruppenadresse gesetzt wird.

17. Netzwerksteuerung nach Anspruch 16, bei der der Sender (50) außerdem dazu eingerichtet ist, Nachrichten an einzelne entfernt angeordnete Einrichtungen entsprechend eindeutigen logischen Adressen zu senden, die die mehreren entfernt angeordneten Einrichtungen (36) zugeordnet sind.

18. Netzwerksteuerung (32) nach Anspruch 16 oder 17, bei der der Sender (50) außerdem dazu eingerichtet ist, Nachrichten zu allen der mehreren Adressen der entfernt angeordneten Einrichtungen entsprechend einer globalen Adresse zu senden.

19. Netzwerksteuerung (32) nach einem der Ansprüche 1 bis 18, bei der der Sender (50) eine sich unendlich wiederholende Abfolge von vorab festgelegten Nachrichten über den gemeinsamen Bus (34) senden kann, der Empfänger (54) eine sich unendlich wiederholende Abfolge von Nachrichten von dem gemeinsamen Bus (34) empfangen kann, und wobei die Netzwerksteuerung (32) die zuvor festgelegten Nachrichten verändern kann, während der Sender (50) Nachrichten sendet und der Empfänger (54) Nachrichten empfängt.

## Revendications

1. Commande de réseau (32) pour diriger numériquement des communications au moyen d'une pluralité de dispositifs à distance (36) par un bus commun (34), la commande de réseau comprenant:
un transmetteur (50) pour transmettre d'une manière numérique des messages par le bus commun;
un récepteur (54) pour recevoir des messages numériques du bus commun;
une horloge (56) pour fournir des signaux d'horloge; et
un transmetteur d'horloge (52) pour transmettre de manière numérique les signaux d'horloge par le bus commun,
où à la fois ledit transmetteur (50) et récepteur (54) sont aptes à fonctionner sélectivement dans l'un quelconque des modes sélectionnés dans le groupe consistant en un mode synchrone et un mode asynchrone, où ledit transmetteur (50) transmet les deux messages et les signaux d'horloge par le bus commun en mode synchrone, et où ledit transmetteur (50) transmet des messages à un débit binaire prédéterminé sans signaux d'horloge d'accompagnement par le bus commun (34) en mode asynchrone, **caractérisée en ce que** ledit transmetteur (50) est apte à modifier le débit binaire prédéterminé auquel les messages sont transmis tout en communiquant avec la pluralité de dispositifs à distance (36); et
**en ce que** ledit récepteur (54) est apte à recevoir des messages lorsque ledit transmetteur (50) modifie le débit binaire prédéterminé sans se baser sur des signaux d'horloge.

2. Commande de réseau (32) selon la revendication 1, dans laquelle ladite horloge (56) reçoit une commande de sélection de baude qui définit le débit binaire prédéterminé auquel ledit transmetteur (50) transmettra les messages en mode asynchrone.

3. Commande de réseau (32) selon les revendications 1 ou 2, dans laquelle ladite commande de réseau (32) est apte à commander un dispositif à distance (36) pour diriger au moins temporairement la communication avec les autres dispositifs à distance (36) par le bus commun (34).

4. Commande de réseau (32) selon l'une quelconque des revendications 1 à 3, dans laquelle ledit récepteur (54) reçoit d'une manière asynchrone des messages du bus commun (34).

5. Commande de réseau (32) selon l'une quelconque des revendications 1 à 4, dans laquelle le bus commun (34) est sélectionné dans un groupe consistant en fil de cuivre torsadé différentiel, fil de cuivre coaxial, cable à fibre optique et fil de cuivre à extrémité unique.

6. Commande de réseau (32) selon l'une quelconque des revendications 1 à 5, dans laquelle la commande de réseau (32) est apte à fonctionner sélectivement dans un quelconque des modes de communication sélectionnés dans le groupe consistant en un mode de communication en semi-duplex et un mode de communication bidirectionnel simultané.

7. Commande de réseau (32) selon l'une quelconque des revendications 1 à 6, dans laquelle ladite commande de réseau (32) est apte à agir comme un dispositif à distance tandis qu'une autre commande de réseau maître dirige les communications avec la pluralité des dispositifs à distance, incluant la commande de réseau, par le bus commun (34).

8. Commande de réseau (32) selon l'une quelconque des revendications 1 à 7, dans laquelle ladite commande de réseau (32) est apte à interragir avec un ordinateur hôte ayant une mémoire pile et une mémoire vive (RAM), où lorsque ladite commande de réseau (32) agit comme dispositif à distance, la commande de réseau maître est apte à accéder sélectivement à l'un quelconque des types de mémoire sélectionnés dans le groupe consistant en la pile de la mémoire séquentielle et de la RAM.

9. Commande de réseau (32) selon la revendication 1, dans laquelle ledit transmetteur (50) transmet un message d'exemple à au moins un dispositif à distance précité (36) selon un débit binaire modifié à la suite de la modification du débit binaire prédéterminé.

10. Commande de réseau (32) selon la revendication 1 ou 9, dans laquelle ledit transmetteur (50) reçoit une instruction de sélection de baude qui définit le débit binaire prédéterminé selon lequel les messages seront transmis.

11. Commande de réseau (32) selon l'une quelconque des revendications 1 à 10, dans laquelle à la fois ledit transmetteur (50) et récepteur (54) sont aptes à fonctionner sélectivement selon n'importe quel protocole de commande sélectionné dans le groupe consistant en codage Manchester et Protocole Emetteur-Récepteur Universel Asynchrone (UART), où lesdits transmetteur (50) et récepteur (54) réagissent à une commande de sélection de protocole de commande qui identifie le protocole de commande selon lequel la pluralité de dispositifs à distance (36) sont aptes à communiquer de sorte que lesdits transmetteur (50) et récepteur (54) transmettent et reçoivent ensuite des messages, respectivement, en accord avec le protocole de commande identifié par la commande de sélection de protocole.

12. Commande de réseau (32) selon l'une quelconque des revendications 1 à 11, dans laquelle ledit transmetteur (50), tout en fonctionnant en accord avec le protocole de commande de codage Manchester, transmet des messages en accord avec le protocole de commande de codage Manchester, et où ledit transmetteur (50) transmet des messages de codage Manchester selon un mode sélectionné dans le groupe consistant en un mode synchrone et un mode asynchrone.

13. Commande de réseau (32) selon l'une quelconque des revendications 1 à 12, dans laquelle ledit transmetteur (50) transmet des messages de codage Manchester constitués d'une portion sync, d'un corps de message et d'un indicateur de parité.

14. Commande de réseau (32) selon l'une quelconque des revendications 1 à 13, dans laquelle ledit transmetteur (50) transmet des messages selon le protocole UART à un débit binaire prédéterminé et utilise un format binaire de non-retour à zéro (NRZ).

15. Commande de réseau (32) selon l'une quelconque des revendications 1 à 14, dans laquelle ledit transmetteur (50), tout en fonctionnant en accord avec le protocole de commande UART, transmet un motif inactif afin de remettre à l'état initial la pluralité de dispositifs à distance avant la transmission de chaque message.

16. Commande de réseau (32) selon l'une quelconque des revendications 1 à 15, dans laquelle:
ledit transmetteur (50) est apte à transmettre des messages comprenant une commande et une adresse d'au moins un dispositif à distance, ledit transmetteur (50) étant conçu en outre pour transmettre simultanément des messages à une pluralité de dispositifs à distance (36) en accord avec un adresse groupe constitué d'une pluralité de binaires, chaque binaire étant associé à un groupe respectif, en permettant ainsi audit transmetteur de diriger un message vers un groupe de dispositifs à distance (36) en établissant le binaire respectif de l'adresse groupe.

17. Commande de réseau (32) selon la revendication 16, dans laquelle ledit transmetteur (50) est également conçu pour transmettre des messages à des dispositifs à distance individuels en accord avec une adresse logique unique attribuée à la pluralité de dispositifs à distance (36).

18. Commande de réseau (32) selon la revendication 16 ou 17, dans laquelle ledit transmetteur (50) est également apte à transmettre des messages à toutes de la pluralité d'adresses à distance en accord avec une adresse globale.

19. Commande de réseau (32) selon l'une quelconque des revendications 1 à 18, dans laquelle le transmetteur (50) est apte à transmettre une séquence de répétitions indéfinie de messages prédéterminés par le bus commun (34), le récepteur (54) est apte à recevoir une séquence de répétitions infinie de messages du bus commun (34), et où la commande de réseau (32) est apte à modifier les messages prédéterminés lorsque le transmetteur (50) transmet des messages et que le récepteur (54) reçoit des messages.
